# EUROPÄISCHE PATENTSCHRIFT

(11) **EP 0 576 702 B1**
(45) Veröffentlichungstag und Bekanntmachung des Hinweises auf die Patenterteilung: **23.08.1995**
(21) Anmeldenummer: 92111018.5
(22) Anmeldetag: 30.06.1992
(51) Int. Cl.: H02M 3/335

(54) **Getakteter Umrichter mit Strombegrenzung**
Switching converter with current limitation
Convertisseur à découpage avec limitation de courant

(43) Veröffentlichungstag der Anmeldung: 05.01.1994
(73) Patentinhaber: SIEMENS AKTIENGESELLSCHAFT, 80333 München (DE)
(72) Erfinder: Immler, Josef, Dipl.-Ing. (FH), W-8039 Puchheim (DE)

(56) Entgegenhaltungen:
- EP-A- 0 404 996
- WO-A-91/15054
- WO-A-91/16756
- DE-B- 2 838 009

## Beschreibung

Die Erfindung bezieht sich auf einen wie im Oberbegriff des Patentanspruchs 1 angegebenen getakteten Umrichter mit Strombegrenzung.

Ein derartiger Umrichter ist bereits aus der EP 0 404 996 A1 bekannt. Um Einschaltstromspitzen innerhalb eines möglichst großen Strombereiches zu unterdrücken, enthält eine Schaltungsanordnung zur Stromistwertbildung des bekannten Umrichters einen elektronischen Schalter, der jeweils während der Anfangsstromspitze des im Hauptstromkreis fließenden Stromes gesperrt ist. Der elektronische Schalter ist durch einen Feldeffekttransistor gebildet, dessen Gate-Elektrode über ein Verzögerungsglied an den Steueranschluß eines im Hauptstromkreis liegenden Leistungsschalters angeschlossen ist.

Auswerteanordnungen zur Auswertung einer mit Hilfe eines Stromsensors gewonnenen Spannung sind ferner aus der WO 91/16756 und der DE-AS 28 38 009 bekannt.

Aufgabe der Erfindung ist es, einen getakteten Umrichter mit Strombegrenzung derart auszubilden, daß der maximale Ausgangsstrom bei Überstrom oder Kurzschluß im Ausgangsstromkreis nicht wesentlich über den Ausgangsnennstrom ansteigt.

Gemäß der Erfindung wird der getaktete Umrichter zur Lösung dieser Aufgabe in der im kennzeichnenden Teil des Patentanspruchs 1 angegebenen Weise ausgebildet. Die zwischen dem Stromsensor und dem Kondensator mit Entladestromkreis angeordnete Auswerteanordnung enthält zweckmäßigerweise einen Feldeffekttransistor, mit dessen Hilfe der Kondensator auf eine dem Momentanwert des Stromes entsprechende Spannung aufgeladen wird und der dabei Anfangsstromspitzen des den Stromsensor durchfließenden Stromes für die Momentanwertstrombegrenzung unwirksam macht.

Weil bei zunehmendem Ausgangsstrom des Umrichters die den elektronischen Schalter leitend steuernden Einschaltimpulse kürzer werden, sinkt die Referenzspannung, mit der der Stromistwert verglichen wird, ebenfalls ab. Der erfindungsgemäße Umrichter hat daher den Vorteil, daß sich eine ab dem Einsatzpunkt der Strombegrenzung steil abfallende oder sogar rückläufige Kennlinie erreichen läßt.

Zweckmäßigerweise wird in der im Anspruch 2 angegebenen Weise ein Mischwert aus der Ausgangsspannung der Integrierschaltung und einer Sollspannung gebildet. Als Quelle für die Sollspannung dient insbesondere eine in einer integrierten Steuerschaltung enthaltene Referenzspannungsquelle.

Bei der Weiterbildung nach Anspruch 3 wird im Kurzschlußfall mit Hilfe des Komparators eine Spannung abgesenkt, die an einem mit einem Steuereingang der Steuerschaltung verbundenen Kondensator liegt und eine in der Steuerschaltung enthaltene Vorrichtung zur Begrenzung der Dauer und/oder Folgefrequenz der Einschaltimpulse bewirkt. Spricht der Komparator im Kurzschlußfall an, so wird die Spannung am Kondensator abgesenkt und die Ausgangsspannung des Umrichters durch Begrenzung der Dauer und/oder Folgefrequenz der Einschaltimpulse reduziert. Der Kondensator ist vorzugsweise Bestandteil einer sogenannten Anlaufschaltung. Derartige Anlaufschaltungen sind bei Umrichtern der vorliegenden Art üblich, um beim Einschalten der Stromversorgung ein langsames Aufladen des am Ausgang liegenden Speicherkondensators zu gewährleisten und damit die Einschaltstromspitze zu begrenzen.

Die Maßnahmen nach Anspruch 4 ergeben, daß bei Einsetzen der Strombegrenzung die Ausgangsspannung zunächst steil absinkt. In Verbindung mit dem Komparator, bei dem die am Sollwerteingang liegende Referenzspannung im Kurzschlußfall abgesenkt wird, ergibt sich bei einsetzendem Kurzschluß zunächsts ein steiler Spannungsabfall mit daran anschließender rückläufiger Kennlinie.

Bei der Weiterbildung nach Anspruch 5 wird der Meßwiderstand in vorteilhafter Weise zugleich für die gewünschte Strombegrenzung und eine dabei zweckmäßige Regelung des Stromes durch überlagerte Spannungsregelung verwendet.

Der getaktete Umrichter läßt sich vorteilhaft zur Speisung von Einrichtungen der elektrischen Nachrichtenübertragungstechnik verwenden.

Die Erfindung wird anhand des in Fig. 1 dargestellten Ausführungsbeispieles und der in den Figuren 2 und 3 gezeigten Diagramme näher erläutert.

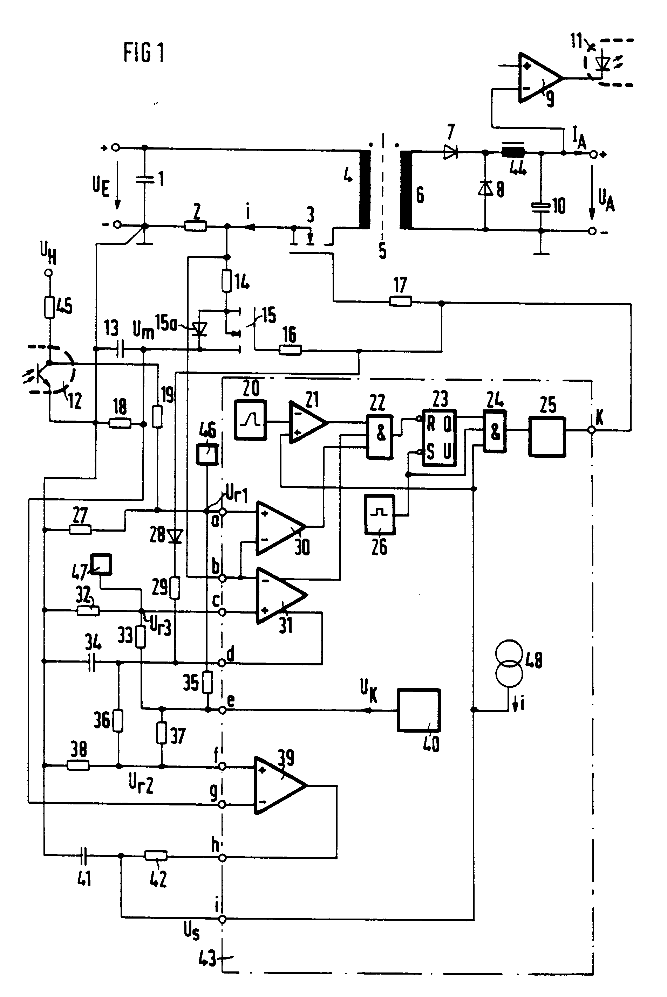

Es zeigen
- Fig. 1: einen getakteten Umrichter mit Strombegrenzung und für den in Fig. 1 gezeigten Umrichter

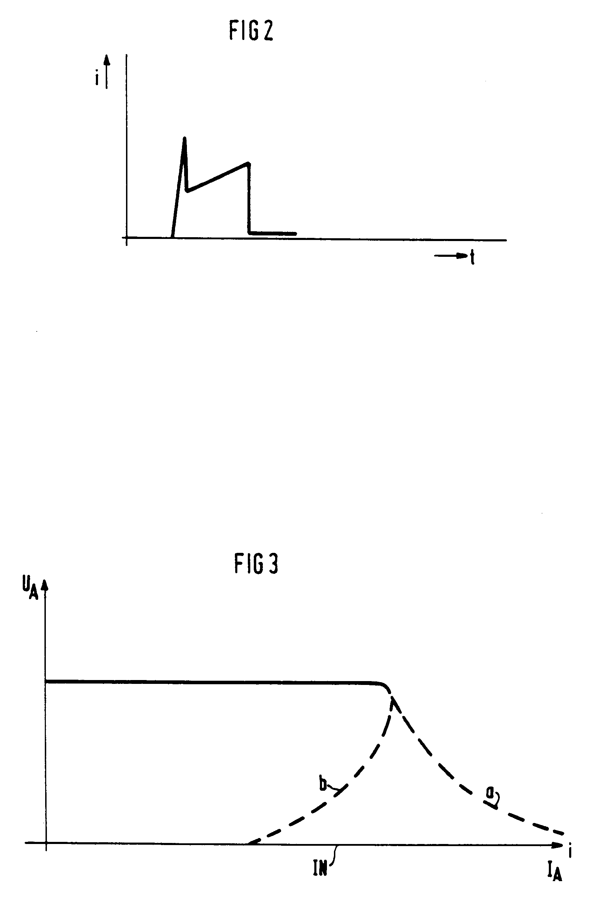

- Fig. 2: den zeitlichen Verlauf eines im eingangsseitigen Hauptstromkreis fließenden Stromimpulses mit Anfangsstromspitze und
- Fig. 3: die Abhängigkeit der Ausgangsspannung vom Ausgangsstrom.

Bei dem in Fig. 1 gezeigten Eintakt-Durchflußumrichter liegt die Eingangsspannung U_{E} am Kondensator 1 und die Ausgangsspannung U_{A} am Kondensator 10. Parallel zum Kondensator 1 liegt eine aus der Primärwicklung 4 des Transformators 5, der Drain- Source-Strecke des Feldeffekttransistors 3 und dem Widerstand 2 gebildete Serienschaltung. Zwischen der Sekundärwicklung 6 des Transformators 5 und dem Kondensator 10 liegt die Gleichrichterdiode 7. In einem auf die Gleichrichterdiode 7 folgenden Querzweig ist die Freilaufdiode 8 angeordnet. In einem Längszweig zwischen Freilaufdiode 8 und Kondensator 10 liegt die Drossel 44.

Der Feldeffekttransistor 3 dient als Leistungsschalter, der Widerstand 2 als Strommeßwiderstand.

Die Steuerelektrode des Feldeffekttransistors 3 ist über den Widerstand 17 an den Anschluß k der Steuervorrichtung 43 angeschlossen, der mit dem Ausgang des Treibers 25 verbunden ist.

Der Komparator 30 dient zur Regelung der Ausgangsspannung U_{A} durch Stromregelung mit überlagerter Spannungsregelung (Current- Mode-Spannungsregelung). Dabei dient als Sollwert des Stromes das Ausgangssignal des Spannungsreglers 9.

Parallel zur Emitter-Kollektorstrecke des im Optokoppler 11, 12 enthaltenen Fototransistors 12 liegt die aus den Widerständen 19 und 27 bestehende Serienschaltung. Der Verbindungspunkt der Widerstände 19 und 27 ist an den nicht invertierenden Eingang des Komparators 30 gelegt, der als Eingang für den Sollwert des Stromes dient. Der nicht invertierende Eingang des Komparators 30 ist ferner an den Abgriff des aus den Widerständen 35 und 27 bestehenden, an die Referenzspannungsquelle 40 angeschlossenen Spannungsteilers gelegt.

Der invertierende Eingang des Komparators 30 ist mit dem gegenüber dem Bezugspotential Spannung führenden Anschluß des Strommeßwiderstandes 2 verbunden. Der Ausgang des Komparators 30 ist an einen Eingang der UND-Schaltung 22 geführt.

Die Steuerschaltung 43 enthält eine Anordnung zur Impulsdauermodulation, mit deren Hilfe die Dauer der am Ausgang k abgegebenen Einschaltimpulse variiert wird. Der Rampengenerator 20 gibt eine sägezahnförmige Spannung an den invertierenden Eingang des Komparators 21 ab. Der nicht invertierende Eingang des Komparators 21 ist mit dem Steuereingang i der Steuerschaltung 43 verbunden. Mit Hilfe der an den Steuereingang i gelegten Steuerspannung U_{S} läßt sich daher die jeweils maximal mögliche Dauer der am Ausgang k abgegebenen Einschaltimpulse festlegen.

Die Steuerspannung U_{S} liegt am Kondensator 41, der an die Stromquelle 48 angeschlossen ist, deren Ausgangsspannung auf z.B. 5 Volt begrenzt ist. Der Kondensator 41 liegt einpolig an Bezugspotential und ist mit seinem Spannung führenden Anschluß über den Widerstand 42 an den Ausgang des Komparators 39 angeschlossen.

Der Ausgang des Komparators 21 ist mit einem Eingang der UND-Schaltung 22 verbunden. Von den beiden weiteren Eingängen der UND-Schaltung 22 liegt der eine am Ausgang des Komparators 30, der andere am Ausgang des Komparators 31. Der nicht invertierende Eingang des Komparators 30 wird über den Anschluß a mit der Referenzspannung Uᵣ₁ beaufschlagt, der nicht invertierende Eingang des Komparators 31 über den Anschluß c mit der Referenzspannung Uᵣ₃. Die Referenzspannung Uᵣ₃ wird mit Hilfe des aus den Widerständen 32 und 33 gebildeten Spannungsteilers aus der Referenzspannung U_{K} des Referenzspannungsgebers 40 gewonnen. Die invertierenden Eingänge der Komparatoren 30 und 31 liegen am Anschluß b, der unmittelbar mit dem gegenüber Bezugspotential Spannung führenden Anschluß des Strommeßwiderstandes 2 verbunden ist. Die Komparatoren 30 und 31 bilden eine Kurzschlußstrom-Begrenzerschaltung, die die Stromspitzen des Eingangsstromes im Submikrosekundenbereich erfaßt und auswertet. Die Vorrichtungen 46 und 47 heben die Referenzspannungen Uᵣ₁ bzw. Uᵣ₂ jeweils während der Anfangsstromspitzen des im primärseitigen Hauptstromkreis fließenden Stromes so an, daß die Komparatoren in diesem Zeitraum nicht ansprechen können.

Der Ausgang der UND-Schaltung 22 ist an den Rücksetzeingang R des Abschalt-Flip-Flops 23 geführt. Der Setzeingang S des Abschalt-Flip-Flops 23 ist mit dem Ausgang des Taktgebers 26 verbunden.

Der Ausgang Q des Abschalt-Flip-Flops 23 ist an einen Eingang der UND-Schaltung 24 geführt. Von den beiden weiteren Eingängen der UND-Schaltung 24 liegt der eine am Ausgang des Taktgebers 26, der andere am Steuereingang i der Steuerschaltung 43. Der Ausgang der UND-Schaltung 24 ist an den Eingang des Treibers 25 geführt.

An den Widerstand 2 ist eine Auswerteanordnung angeschlossen, die aus dem Feldeffekttransistor 15, dem Kondensator 13 und dem einen Entladestromkreis bildenden Widerstand 18 besteht. Die Source-Elektrode des Feldeffekttransistors 15 ist über den Widerstand 14 mit dem Verbindungspunkt zwischen der Source-Elektrode des Feldeffekttransistors 3 und dem Widerstand 2 zusammengeführt. Die Steuerelektrode des Feldeffekttransistors 15 ist über den Widerstand 16 an den Anschluß k der Steuerschaltung 43 geführt. Beide Feldeffekttransistoren 3 und 15 sind N-Kanal-MOS-Transistoren.

Der Verbindungspunkt von Kondensator 13, Widerstand 18 und Widerstand 2 liegt wie der Minuspol der nicht dargestellten Eingangsspannungsquelle an Masse bzw. Bezugspotential.

Der Komparator 39 ist mit seinem nicht invertierenden Eingang an den Abgriff des aus den Widerständen 37 und 38 bestehenden Spannungsteilers angeschlossen. Der Spannungsteiler 37, 38 liegt zwischen dem Anschluß e der Steuerschaltung 43 und dem Bezugspotential. Der Anschluß e der Steuerschaltung 43 ist mit dem Ausgang der Referenzspannungsquelle 40 verbunden. Der Komparator 39 ist außerdem mit seinem invertierenden Eingang an den gegenüber dem Bezugspotential Spannung führenden Anschluß des Kondensators 13 angeschlossen.

Die Steuervorrichtung 43 dient zur Regelung der Ausgangsspannung U_{A} durch unterlagerte Stromregelung. Der Regelkreis verläuft vom Ausgang des Umrichters über den Spannungsvergleicher 9, den aus der lichtemittierenden Diode 11 und dem Fototransistor 12 bestehenden Optokoppler 11, 12, dem Komparator 30, dem aus den Schaltmitteln 22, 23, 24 gebildeten Pulsweitenmodulator und den Treiber 25 zum Anschluß k.

Mit Hilfe des synchron mit dem Feldeffekttransistor 3 angesteuerten N-Kanal-MOS-Transistors 15 wird der Kondensator 13 niederohmig auf den Maximalwert der Spannung am Meßwiderstand 2 aufgeladen. Die im Feldeffekttransistor 15 zwangsläufig enthaltene und daher strichliert dargestellte, vergleichsweise langsame Inversdiode 15 a des MOS-Transistors 15 ist dabei praktisch wirkungslos, da ihre Schwellenspannung in Durchlaßrichtung nicht erreicht wird. In der Sperrphase wird der Feldeffekttransistor 15 sehr schnell hochohmig und verhindert eine rückwärtige Entladung.

Der Kondensator 13 wird mit der gewünschten Zeitkonstante über den Widerstand 18 entladen. Da der Restwiderstand des Feldeffekttransistors 15 sehr klein ist gegenüber dem Widerstandswert des Entladewiderstandes 18, entspricht die Spannung am Kondensator 13 sehr gut dem Maximalwert am Widerstand 2 auftretenden Spannung.

Die am Kondensator 13 liegende Spannung wird mit Hilfe des Komparators 39 ausgewertet.

Die Stromimpulse werden am Widerstand 2 in Spannungsimpulse umgesetzt. Da die Spannungsimpulse - um die Verlustleistung möglichst gering zu halten - nur im Hundertmillivoltbereich liegen, wird zur Gleichrichtung statt einer Diode ein geschalteter Gleichrichter eingesetzt, der aus dem Kleinsignal-Feldeffekttransistor 15 gebildet ist. Damit kann der am Widerstand 2 auftretende Scheitelwert der Spannung praktisch ohne Spannungsabfall an den Kondensator 13 geschaltet und dort abgespeichert werden.

Das Gate des Kleinsignal-Feldeffekttransistors 15 wird vom Gateimpuls des Feldeffekttransistors 3 angesteuert. Der Kondensator 13 ist daher nur während der Stromflußzeit im primärseitigen Hauptstromkreis, während der eine Spannung am niederohmigen Meßwiderstand 2 auftritt, mit diesem verbunden. Der Kondensator 13 wird daher während der Impulspause, die gegenüber der Impulsdauer bis zu etwa fünfzigfach länger ist, nur wenig entladen. Mit dem Widerstand 18 läßt sich eine langsame, definierte Entladung des Kondensators 13 einstellen.

Um Störungen des Meßwertes durch die Anfangsstromspitze zu unterdrücken, sind in der Gatezuleitung des Feldeffekttransistors 15 der Widerstand 16 und in der Source-Zuleitung des Feldeffekttransistors 15 der Widerstand 14 vorgesehen. Der Widerstand 16 bewirkt zusammen mit der Eingangskapazität des Feldeffekttransistsors 15 eine kurze Einschaltverzögerung. Der Widerstand 14 verhindert eine Spitzenwert-Aufladung des Kondensators 13 bei extrem kurzen Anfangsstromspitzen.

Die mit Hilfe des Transistors 15 am Widerstand 2 abgetastete und im Kondensator 13 gespeicherte Meßspannung Uₘ wird an den invertierenden Eingang des Komparators 39 gelegt, an dessen nicht invertierenden Eingang die Referenzspannung Uᵣ₂ liegt. Diese Referenzspannung Uᵣ₂ wird aus der Konstantspannung Uk der Referenzspannungsquelle 40 und der Ausgangsspannung der Integrierschaltung 28, 29, 34 gewonnen. Die Integrierschaltung besteht aus einer in einem eingangsseitigen Längszweig liegenden Serienschaltung aus der Diode 28 und dem Widerstand 29 und dem in einem ausgangsseitigen Querzweig liegenden Kondensator 34 und ist mit ihrem Eingang an den Ausgang k der Steuerschaltung angeschlossen. Weil bei zunehmendem Ausgangsstrom des Umrichters der Gateimpuls ab dem Einsetzen der Strombegrenzung kürzer wird und somit die Referenzspannung Uᵣ₂ absinkt, läßt sich eine ab dem Einsatzpunkt der Strombegrenzung steil ab fallende bzw. sogar rückläufige Kennlinie erreichen.

Andererseits wird die Referenzspannung Uᵣ₂ abgesenkt, wenn der Anschluß d der Steuerschaltung 43 an das Bezugspotential geschaltet wird. Dies geschieht immer dann, wenn der zur Überstromerkennung dienende Komparator 31 anspricht, um die Einschaltphase des Transistors 3 zu beenden. Damit wird ohne Abgleichmaßnahmen erreicht, daß die Kurzschlußstrombegrenzung nicht vor der Stromimpulsabschaltung einsetzt und dennoch der Ausgangskurzschlußstrom in der Nähe des Nennstromes gehalten wird.

Der Ausgang des Komparators 39 senkt beim Erreichen des Kurzschluß- bzw. Überstrom-Grenzwertes die Spannung am Kondensator 41 ab und gibt dem Eingang i der Steuerschaltung für den Komparator 21 einen Sollwert für einen kürzeren Ansteuerimpuls vor. Über diesen Weg wird die Stromflußzeit des Transistors 3 unmittelbar vorgegeben. Aus diesem Grunde steigen auch im Kurzschlußfall die Stromspitzen und somit auch die Abschaltspannungsspitzen gar nicht auf höhere Werte als im Normalbetrieb an. In vorteilhafter Weise brauchen die Schaltmittel des Umrichters nicht für extreme Belastungsspitzen ausgelegt werden. Außerdem ergeben sich für den Kurzschlußfall besonders kleine Funkstörspannungen.

Der Umrichter kann als Durchfluß- oder als Sperrumrichter mit konstanter Taktfrequenz oder als Umrichter mit Frequenzmodulation ausgebildet sein. In der Figur ist als Beispiel ein Eintaktdurchflußwandler mit konstanter Taktfrequenz dargestellt.

Der Komparator 21 vergleicht Rampenspannung mit extern einstellbarer Spannung U_{S}.

Das Abschalt-Flip-Flop 23 wird von der Abstiegsflanke der Taktimpulse des Taktgebers 26 gesetzt, wenn am Ausgang des UND-Gliedes 22 kein Abschaltsignal anliegt. Beim Auftreten eines Abschaltimpulses am Ausgang des UND-Gliedes 22 wird das Abschalt-Flip-Flop 23 zurückgesetzt.

Fig. 2 zeigt den prinzipiellen Verlauf der im eingangsseitigen Hauptstromkreis fließenden Stromimpulse. An eine Anfangsstromspitze schließt sich ein rampenförmiger Verlauf an, währenddessen der Strom linear mit der Zeit ansteigt. Bei Erreichen eines vorgegebenen Stromwertes wird der Stromimpuls beendet. Überragt - wie in Fig. 2 gezeigt - die Anfangsstromspitze den eigentlichen Stromimpuls, so muß sie mit geeigneten Mitteln unterdrückt werden, um ein vorzeitiges Sperren des im Hauptstromkreis liegenden Leistungsschalters zu verhindern.

Fig. 3 zeigt die Abhängigkeit der Ausgangsspannung U2 vom Ausgangsstrom I2. Bei Ausgangsströmen I2 unterhalb des Nennstromes I_{N} ist die Ausgangsspannung U2 praktisch konstant. Wird der Nennwert I_{N} des Ausgangsstromes I2 überschritten, so sinkt die Ausgangsspannung U2 zunächst steil ab. Ohne den Komparator 39 ergäbe sich der strichliert dargestellte Verlauf a, der auf der Wirkung des Komparators 31 beruht. In Verbindung mit dem Komparator 39 ergibt sich die rücklaufende Kennlinie b.

## Patentansprüche

1. Getakteter Umrichter mit Strombegrenzung, mit einem im Hauptstromkreis angeordneten und mit seinem Steuereingang an einen Einschaltimpulse abgebenden Steuerausgang (k) einer Steuerschaltung (43) angeschlossenen und durch die Einschaltimpulse jeweils einschaltbaren elektronischen Schalter, mit einem in Serie zum elektronischen Schalter angeordneten Stromsensor (2) , mit einer zwischen dem Stromsensor (2) und einem Kondensator (13) mit Entladestromkreis (18) angeordneten Auswerteanordnung und mit einer Steuervorrichtung, die an den Kondensator (13) angeschlossen ist und bei über einem vorgegebenem Grenzwert liegenden Kondensatorspannungen die Steuerschaltung (43) im Sinne einer Begrenzung des im Hauptstromkreis fließenden Pulsstromes steuert, wobei der Kondensator (13) und eine Sollspannungsquelle (40, 37, 38) einpolig an einem Bezugspotential liegen und mit ihren freien Anschlüssen an die Eingänge eines Komparators (39) geführt sind, dessen Ausgang an einen Steuereingang der Steuerschaltung (43) geführt ist, über den eine Begrenzung des im Hauptstromkreis fließenden Stromes auslösbar ist,
**dadurch gekennzeichnet,** daß an den Steuerausgang (k) der Steuerschaltung (43) eine Integrierschaltung (28, 29, 34) angeschlossen ist und daß die Ausgänge der Sollspannungsquelle (40, 37, 38) und der Integrierschaltung über eine Widerstandsanordnung (36,37,38) additiv an den Sollwerteingang des Komparators (39) geführt sind.

2. Umrichter nach Anspruch 1,
**dadurch gekennzeichnet,** daß der Sollwerteingang des Komparators (39) am Abgriff eines an eine Referenzspannungsquelle (40) angeschlossenen Spannungsteilers (37, 38) liegt und daß parallel zu einem der Widerstände (38) des Spannungsteilers eine Serienschaltung liegt, die aus einem am Ausgang der Integrierschaltung liegenden Kondensator (34) und einem Widerstand (36) besteht.

3. Umrichter nach Anspruch 1 oder 2,
**dadurch gekennzeichnet,** daß am Ausgang des Komparators (39) eine aus einem Widerstand (42) und einem Kondensator (41) bestehende Serienschaltung liegt und daß der gegenüber dem Bezugspotential Spannung führende Anschluß des Kondensators (41) an einen Steuereingang (i) der Steuerschaltung (43) geführt ist, der mit einer in der Steuerschaltung (43) enthaltenen Vorrichtung zur Begrenzung der Dauer und/oder Folgefrequenz der Einschaltimpulse verbunden ist. Umrichter nach einem der Ansprüche 1 bis 3,
**dadurch gekennzeichnet,** daß ein weiterer Komparator (31) mit zwei Ausgängen vorgesehen ist, der mit seinem nicht invertierenden Eingang an eine Referenzspannung (Uᵣ₃) angeschlossen ist und dessen invertierender Eingang an den gegenüber dem Bezugspotential Spannung führenden Anschluß des Stromsensors (2) angeschlossen ist und bei Erreichen eines vorgegebenen Strommeßwertes anspricht und daß ein Ausgang des weiteren Komparators (31), der im angesprochenem zustand des Komparators (31) Bezugspotential abgibt, an den Ausgang der Integrierschaltung geführt ist.

4. Umrichter nach einem der vorgehenden Ansprüche,
**dadurch gekennzeichnet,** daß der Stromsensor (2) zugleich als Istwertgeber eines Stromreglers mit überlagerter Spannungsregelung dient, bei dem der Istwert der Spannung der Sollwert der Stromregelung ist.

## Claims

1. Clocked converter with current limiting, having an electronic switch, which is arranged in the main circuit, is connected by its control input to a control output (k), emitting turn-on pulses, of a control circuit (43) and can be turned on in each case by the turn-on pulses, having a current sensor (2) arranged in series with the electronic switch, having an evaluation arrangement arranged between the current sensor (2) and a capacitor (13) with a discharge circuit (18), and having a control device, which is connected to the capacitor (13) and, in the event of capacitor voltages exceeding a predetermined limit value, controls the control circuit (43) in the sense of limiting the pulsed current flowing in the main circuit, the capacitor (13) and a desired voltage source (40, 37, 38) each being connected by one pole to a reference potential and being connected by their free connections to the inputs of a comparator (39), the output of which comparator is passed to a control input of the control circuit (43), via which input limiting of the current flowing in the main circuit can be triggered, characterized in that an integrating circuit (28, 29, 34) is connected to the control output (k) of the control circuit (43), and in that the outputs of the desired voltage source (40, 37, 38) and of the integrating circuit are passed cumulatively, via a resistor arrangement (36, 37, 38), to the desired value input of the comparator (39).

2. Converter according to Claim 1, characterized in that the desired value input of the comparator (39) is connected to the tap of a voltage divider (37, 38) connected to a reference voltage source (40), and in that a series circuit comprising a capacitor (34), connected to the output of the integrating circuit, and a resistor (36) is connected in parallel with one of the resistors (38) of the voltage divider.

3. Converter according to Claim 1 or 2, characterized in that a series circuit comprising a resistor (42) and a capacitor (41) is connected to the output of the comparator (39), and in that the connection, which carries voltage with respect to the reference potential, of the capacitor (41) is connected to a control input (i) of the control circuit (43), which input is connected to a device, contained in the control circuit (43), for limiting the duration and/or repetition rate of the turn-on pulses.

4. Converter according to one of Claims 1 to 3, characterized in that a further comparator (31) having two outputs is provided, the non-inverting input of which is connected to a reference voltage (Uᵣ₃) and the inverting input of which is connected to the connection, which carries voltage with respect to the reference potential, of the current sensor (2), the said comparator responding when a predetermined current measured value is reached, and in that an output of the further comparator (31), which outputs reference potential when the comparator (31) has responded, is passed to the output of the integrating circuit.

5. Converter according to one of the preceding claims, characterized in that the current sensor (2) simultaneously serves as an actual value transmitter of a current controller with superimposed voltage control, in which the actual value of the voltage represents the desired value of the current control.

## Revendications

1. Convertisseur commandé de façon cadencée et à limitation de courant, comportant un interrupteur électronique, qui est disposé dans le circuit principal et est connecté par son entrée de commande à une sortie de commande (k), qui fournit des impulsions de fermeture, d'un circuit de commande (43) et qui peut être fermé par les impulsions de fermeture, un détecteur de courant (2) disposé en série avec l'interrupteur électronique, un dispositif d'exploitation disposé entre le détecteur de courant (2) et un condensateur (13) pourvu d'un circuit de décharge (18), et un dispositif de commande, qui est raccordé au condensateur (13) et, dans le cas où les tensions aux bornes du condensateur sont supérieures à une valeur limite prescrite, commande le circuit de commande (43) dans le sens d'une limitation de l'impulsion de courant circulant dans le circuit principal, et le condensateur (13) et une source de tension de consigne (40, 37,38) étant raccordés par un pôle à un potentiel de référence et étant reliés, par leurs bornes libres, aux entrées d'un comparateur (39), dont la sortie est raccordée à une entrée de commande du circuit de commande (43) et au moyen duquel une limitation du courant circulant dans le circuit principal peut être déclenchée, caractérisé par le fait qu'un circuit intégrateur (28,29,34) est raccordé à la sortie de commande (k) du circuit de commande (43) et que les sorties de la source de tension de consigne (40,37,38) et du circuit intégrateur sont reliées de façon additive, par l'intermédiaire d'un dispositif à résistances (36,37,38) à l'entrée de valeur de consigne du comparateur (39).

2. Convertisseur suivant la revendication 1, caractérisé par le fait que l'entrée de valeur de consigne du comparateur (39) est raccordée à la prise d'un diviseur de tension (37,38) raccordé à une source de tension de référence (40) et qu'en parallèle avec l'une des résistances (38) du diviseur de tension est branché un circuit série, qui est constitué d'un condensateur (34), se trouvant à la sortie du circuit intégrateur, et d'une résistance (36).

3. Convertisseur suivant la revendication 1 ou 2, caractérisé par le fait qu'un circuit série constitué d'une résistance (42) et d'un condensateur (41) se trouve à la sortie du comparateur (39) et que la borne du condensateur (41), qui applique une tension par rapport au potentiel de référence, est reliée à une entrée de commande (i) du circuit de commande (43), qui est reliée à un dispositif, qui est présent dans le circuit de commande (43) et sert à limiter la durée et/ou la fréquence de récurrence des impulsions de fermeture.

4. Convertisseur suivant l'une des revendications 1 à 3, caractérisé par le fait qu'il est prévu un autre comparateur (31), qui comporte deux sorties, qui est raccordé, par son entrée non inverseuse, à une tension de référence (Uᵣ₃), dont l'entrée inverseuse est raccordée à la borne du détecteur de courant (2) appliquant une tension par rapport au potentiel de référence, et qui répond lorsqu'est atteinte une valeur de mesure d'intensité prescrite, et qu'une sortie de l'autre comparateur (31), qui fournit le potentiel de référence lorsque le comparateur (31) a répondu, est reliée à la sortie du circuit intégrateur.

5. Convertisseur suivant l'une des revendications précédentes, caractérisé par le fait que le détecteur de courant (2) sert simultanément de générateur de valeurs de consigne d'un régulateur de courant, auquel est superposée une régulation de tension et dans lequel la valeur réelle de la tension est la valeur de consigne de la régulation de courant.
